# EUROPÄISCHE PATENTSCHRIFT

(11) **EP 0 473 010 B1**
(45) Veröffentlichungstag und Bekanntmachung des Hinweises auf die Patenterteilung: **14.06.1995**
(21) Anmeldenummer: 91113634.9
(22) Anmeldetag: 14.08.1991
(51) Int. Cl.: G01B 11/24, G01B 11/00

(54) **Verfahren zur berührungslosen Vermessung von Objektoberflächen**
Procedure for contactless measurement of object-surfaces
Procédé de mesure sans contact des surfaces d'objets

(30) Priorität: 25.08.1990 DE 4026942
(43) Veröffentlichungstag der Anmeldung: 04.03.1992
(73) Patentinhaber: Firma Carl Zeiss, D-73446 Oberkochen (DE); CARL-ZEISS-STIFTUNG, HANDELND ALS CARL ZEISS, D-73446 Oberkochen (DE)
(72) Erfinder: Heier, Helmut, W-7080 Aalen (DE); Koch, Klaus-Peter, Dr., W-7080 Aalen (DE); Breyer, Karl-Hermann, Dr., W-7920 Heidenheim (DE)

(56) Entgegenhaltungen:
- EP-A- 0 197 341
- EP-A- 0 330 901
- PATENT ABSTRACTS OF JAPAN, Band 14, Nr. 565 (P-1143), 17. Dezember 1990 & JP-A-2 243 914
- PATENT ABSTRACTS OF JAPAN, Band 9, Nr. 079 (P-374), 9. April 1985 & JP-A-59 210 308
- Handbuch "Fertigungsmesstechnik", herausgegeben von H.-J. Warnecke und W. Dutschke, Springer-Verlag 1984, Seiten 271-275, 292, 293

## Beschreibung

Für die taktile Objektvermessung sind Koordinatenmeßgeräte in verschiedenen Bauformen bekannt. All diese Geräte besitzen einen in drei Raumrichtungen positionierbaren Meßarm, an dessen Ende ein das zu vermessende Objekt mechanisch berührender Tastkopf befestigt ist.

Für Anwendungsfälle, in denen sehr große Werkstücke vermessen werden müssen oder eine hohe Punktdichte verlangt wird, sind diese Geräte weniger geeignet. Denn da jeder Meßpunkt einzeln angefahren werden muß, ergeben sich hierbei relativ lange Meßzeiten.

Es ist deshalb bereits auch vorgeschlagen worden, derartige Objekte optisch durch einen räumlichen Vorwärtseinschnitt von mindestens zwei Punkten aus, beispielsweise mit Hilfe von zwei Theodoliten zu vermessen.

Mit einfachen, manuell arbeitenden Systemen dieser Art ist aber ebenfalls keine signifikanten Meßzeitverkürzung zu erreichen, da dann ebenfalls wieder jeder Meßpunkt einzeln vom Bedienpersonal mit beiden optischen Zielgeräten angepeilt werden muß.

Es ist daher bereits vorgeschlagen worden, die Achsen der Theodolite zu motorisieren und in den Strahlengang des Beobachtungsfernrohrs der Theodolite elektronische Sensoren in Form von CCD-Kameras einzukoppeln, deren Bild anschließend automatisch in einer angeschlossenen Bildverarbeitungseinheit ausgewertet wird. Ein derartiges Meßsystem ist beispielsweise in den VDI Berichten Nr. 711, 1988 auf Seite 139 - 151 beschrieben.

Das bekannte System ist jedoch sehr aufwendig und teuer, da es für ein Meßsystem zur Vermessung von Objekten aus dem industriellen Bereich eine ganze Reihe unnötiger Komponenten enthält. Denn die verwendeten Theodolite sind Spezialinstrumente für die Geodäsie und enthalten z.B. Kompensatoren, Horizontiervorrichtungen, mechanische Grob/Feintriebe für die Winkeleinstellung, mehrfach abgetastete Winkelkreise und eine Reihe von Bauteilen, die lediglich für eine manuelle Bedienung bzw. für geodätische Anwendungen erforderlich sind, nicht aber für Messungen an Industrieobjekten.

Andererseits liefern die Theodolite nur im horizontierten Zustand mit lotrecht gestellter Stehachse brauchbare Winkelwerte. Dies wiederum schränkt die Anwendbarkeit für ein Meßsystem zur Vermessung von Objekten im industriellen Bereich stark ein.

Absolut wird für industrielle Objekte eine bedeutend höhere Meßgenauigkeit als im geodätischen Bereich gefordert. Denn die Abmessungen der interessierenden Objekte sollen auf wenige »m genau bestimmt werden. Das erfordert, daß die räumliche Zuordnung zwischen den für die Messung verwendeten Sensoren und dem Meßobjekt selbst sich während eines Meßzyklus möglichst nicht verändert, sondern in dem genannten Bereich von wenigen »m stabil erhalten bleibt. Mit Theodoliten, die auf drei Füßen einfach neben dem zu vermessenden Objekt aufgestellt werden, läßt sich diese Forderung nur sehr schwer erfüllen. Denn aufgrund von Schwingungen, Temperatureinflüssen etc. ändern sich die Lagebeziehungen zwischen Objekt und Sensor.

In der EP-A1 0 256 968 ist ein Verfahren zur berührungslosen Vermessung von Objekten großer Ausdehnung beschrieben, das mit zwei motorisch verdreh- bzw. schwenkbaren Videokameras arbeitet, deren Signale zusammen mit den Winkeldaten von der Dreh- bzw. Schwenkachse zugeordneten Gebern einem Rechner zur Bestimmung der Koordinatenwerte zugeführt sind. Abgesehen davon, daß hier nicht gesagt ist, welchen Aufbau die benutzte Dreh- bzw. Schwenkeinrichtung besitzt, wird das Problem der lagemäßigen Fixierung von Meßobjekt und Sensor dort ebenfalls nicht angesprochen.

Schließlich ist in der US-PS 42 26 536 ein berührungslos optisch arbeitendes Meßsystem zur Konturvermessung von z.B. Rotorblättern beschrieben, bei denen je zwei Markenprojektoren und zwei elektro-optische Tracker an einem gemeinsamen Rahmen befestigt sind, der auf Schienen so verfahrbar ist, daß optische Schnitte über die ganze Länge des Objekts erzeugt und nach dem Triangulationsprinzip vermessen werden können.

Dieses System arbeitet ebenfalls relativ langsam, da der elektro-optische Tracker der über die Objektoberfläche bewegten Lichtmarke exakt nachgeführt werden muß. Konstante Lagebeziehungen zwischen dem Meßsystem einerseits und dem zu vermessenden Objekt andererseits hängen von der Qualität der verwendeten Lager und Führungen des verschiebbaren Rahmens ab und lassen sich sicher nicht in dem oben angegebenen Bereich der Meßgenauigkeit von wenigen »m einhalten.

Außerdem werden bei all den bekannten Meßeinrichtungen stets mindestens zwei Bildsensoren benötigt.

In der EP 0 330 901 A1 ist ein Koordinatenmeßgerät beschrieben, das am unteren Ende seines Meßarms eine Videokamera trägt. Die Videokamera ist dort starr befestigt, so daß es nicht möglich ist, das Objekt aus unterschiedlichen Positionen heraus mit der Videokamera aufzunehmen, um Tiefeninformation zu gewinnen. Zur Abstandsmessung in Richtung des Meßarms dient vielmehr ein separater Laserentfernungsmesser.

Es ist die Aufgabe der vorliegenden Erfindung, ein Verfahren zur berührungslosen Vermessung von Objektoberflächen von Gegenständen aus dem Bereich der industriellen Fertigung anzugeben, mit dem unter Verwendung weniger weitgehend standardisierter Meßkomponenten schnell und mit hoher Genauigkeit eine Vielzahl von Meßpunkten gleichzeitig erfaßt werden können.

Diese Aufgabe wird mit den im Anspruch 1 angegebenen Maßnahmen gelöst.

Das Verfahren gemäß der Erfindung wird unter Verwendung eines handelsüblichen, an sich bekannten Koordinatenmeßgerätes durchgeführt, das eine messende Dreh-Schwenk-Einrichtung besitzt, an die statt des sonst dort angebauten taktilen Tastkopfes eine Videokamera eingesetzt ist. Neben dem Koordinatenmeßgerät sind nur wenige weitere Baugruppen vorzusehen, wie ein Bildspeicher zur Abspeicherung der in den verschiedenen Stellungen des Meßarms aufgenommenen Videobilder, eine Bildverarbeitungseinheit, die die Bildauswertung durchführt, sowie eine geeignete Software, die den Rechner des Koordinatenmeßgerätes in die Lage versetzt, die Objektkoordinaten nach den aus der Photogrammetrie bekannten Verfahren des räumlichen Vorwärtseinschnitts zu berechnen.

Da die zu vermessenden Objekte auf einem Koordinatenmeßgerät aufgelegt sind, ist die räumliche Zuordnung der Videokamera in den verschiedenen Aufnahmepositionen und zum Objekt mit der für das Koordinatenmeßgerät spezifizierten Genauigkeit eingehalten. Umgebungseinflüsse wie z.B. Schwingungen, thermische Driften etc. sind weitgehend ausgeschaltet, da das Koordinatenmeßgerät in der Regel einen schwingungsgedämpften Maschinentisch besitzt und gegen die angesprochenen Störeinflüsse abgeschirmt werden kann. Zudem ist nur eine einzige Videokamera für das Vermessen des Objekts erforderlich. Das hat mehrere Vorteile. Abgesehen von der Einsparung der sonst benötigten zweiten Videokamera sind nämlich auch nur Kalibrierdaten für diese eine Videokamera zu gewinnen, abzuspeichern und bei der Auswertung zu berücksichtigen.

Das gemäß der Erfindung aufgebaute und zur Durchführung des Verfahrens in Anspruch 1 geeignete Koordinatenmeßgerät besitzt den in Anspruch 6 angegebenen Aufbau.

Dabei ist es zweckmäßig, wenn die Kamera zusammen mit einer optischen Projektionseinheit über das Dreh/Schwenkgelenk am Meßarm des Koordinatenmeßgerätes befestigt ist. Es ist dann möglich, Meßpunkte gezielt zu markieren, wenn die Form von ausgedehnten Flächen ohne Eigencharakteristika vermessen werden soll. Kamera und Projektionseinheit bilden dann zweckmäßig eine gemeinsame Baueinheit, die an eine reproduzierbare Halterung am Dreh/Schwenkgelenk von Hand oder automatisch einwechselbar ist.

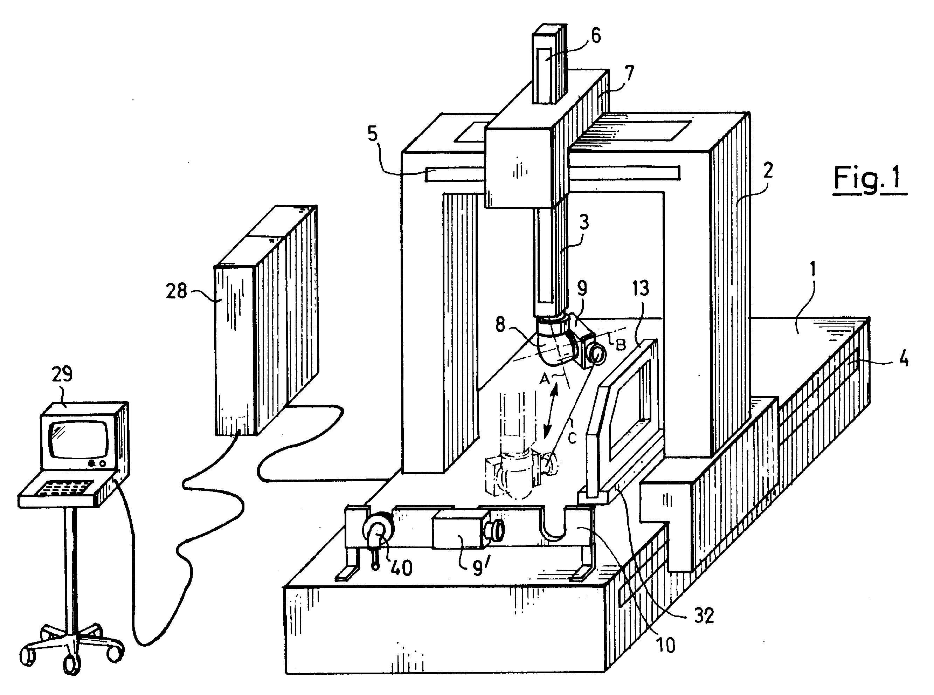

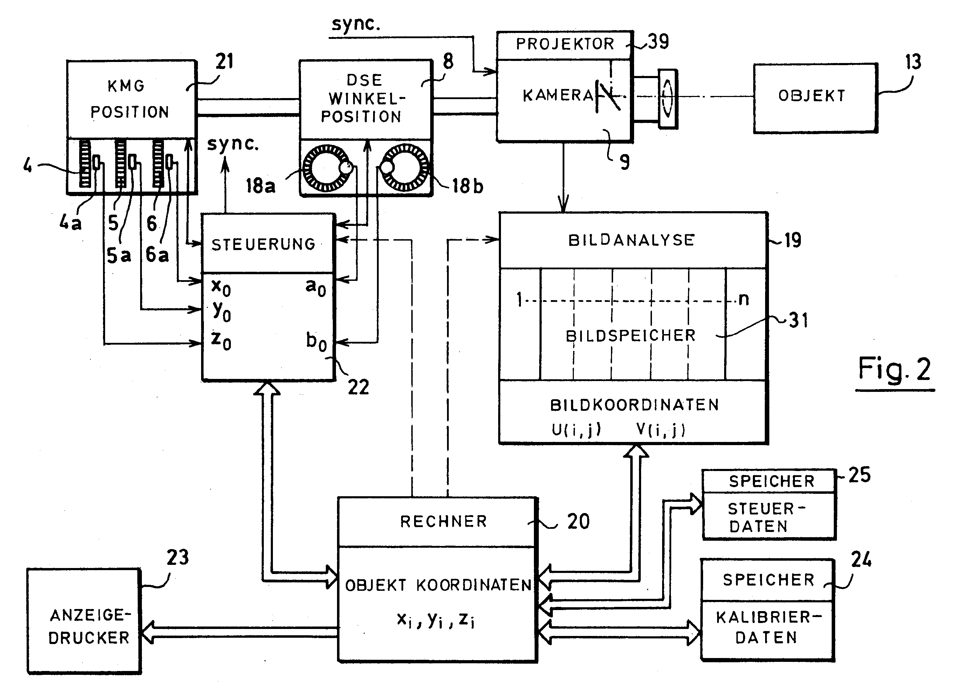

Weitere vorteilhafte Ausgestaltungen der Erfindung sind in den abhängigen Ansprüchen angegeben und werden nachstehend anhand der Figuren 1 und 2 eines Ausführungsbeispiels beschrieben.
- Fig. 1: ist eine perspektivische Darstellung eines berührungslos arbeitenden Koordinatenmeßgerätes gemäß der Erfindung;
- Fig. 2: ist ein Blockschaltbild der wesentlichen Komponenten des Koordinatenmeßgerätes aus Fig. 1.

Das in Fig. 1 dargestellte Koordinatenmeßgerät in Portalbauweise besitzt einen stabilen Tisch (1) aus Granit, der gegen Umwelteinflüsse isoliert auf vier Schwingungsdämfpern ruht. Auf diesen Tisch (1) ist mittels einer Halterung (32) das zu vermessende Werkstück (13) aufgesetzt.

Der Aufbau eines solchen Koordinatenmeßgerätes ist an sich bekannt und braucht deshalb hier nicht im Detail beschrieben zu werden. Das in y-Richtung verfahrbare Portal des Gerätes ist mit (2), der darauf in x-Richtung verfahrbare Querwagen mit (7) und der im Querwagen in z-Richtung vertikal verschiebbare Meßarm (Pinole) des Gerätes ist mit (3) bezeichnet. Ebenfalls dargestellt sind die Maßstäbe (4), (5) und (6) zur Messung der y-, x- und z-Position des an das vordere Ende des Meßarms angebauten Dreh/Schwenkgelenks (8).

Das Dreh/Schwenkgelenk (8) ist um zwei senkrecht aufeinander stehende Drehachsen (A, B) motorisch dreh- bzw. schwenkbar und mit Winkelpositionsgebern für die Drehachse (A) und die Schwenkachse (B) ausgerüstet. Der genaue Aufbau des Dreh/Schwenkgelenks (8) ist beispielsweise in dem US-Patent 48 88 877 beschrieben. Die Winkelpositionsgeber des Gelenks besitzen eine Auflösung von 0,5 Winkelsekunden. Höhere Auflösungen sind beispielsweise mit entsprechend feiner unterteilten Winkelpositionsgebern bzw. durch eine höhere Interpolation der inkrementalen Teilkreise erzielbar.

An das Dreh/Schwenkgelenk (8) ist über eine hier nicht näher dargestellte reproduzierbare Halterung eine Videokamera (9) angesetzt. Die Kamera (9) nimmt den Platz ein, den sonst das üblicherweise an das Dreh/Schwenkgelenk angesetzte taktile Meßwerkzeug des Koordinatenmeßgerätes einnimmt.

Für die automatische Auswechslung der Videokamera gegen das taktile Meßwerkzeug und umgekehrt ist am Rande des Meßbereiches des Koordinatenmeßgerätes ein Magazin (10) aufgebaut, in dem eine Anzahl von taktilen Tastern (40) mit unterschiedlichen Verlängerungen, sowie Kameras (9) mit unterschiedlichen Optiken abgelegt sind.

Zur motorischen Ausrichtung des Dreh/Schwenkgelenks (8) bzw. der daran befestigten Kamera (9) und zur Verarbeitung der Meßwerte der Maßstäbe (4 bis 6) sowie der Winkelgeber im Dreh/Schwenkgelenk (8) dient eine Steuerung, die in dem mit (28) bezeichneten Schrank untergebracht ist. Dieser Schrank enthält auch die Elektronik zur Versorgung der Kamera (8) und die Bildspeicher zur Abspeicherung der Kamerabilder sowie die Bildverarbeitungselektronik. Mit (29) ist eine verfahrbare Eingabetastatur bezeichnet, die an den Steuerschrank (28) angeschlossen ist und mit der das Koordinatenmeßgerät bedient werden kann.

Die Kamera (9) kann deshalb mit Hilfe des Dreh/Schwenkgelenks (8) bezüglich der optischen Achse ihres Objektivs in verschiedenen Stellungen des Meßarms (3) auf das Objekt (13) ausgerichtet werden und erlaubt eine vollständige, berührungslose Vermessung, wie nachher noch beschrieben wird. In jedem Falle sind für die Vermessung mindestens zwei verschiedene Stellungen erforderlich, aus denen heraus Bilder des Objekts (13) aufgenommen werden. Diese beiden Stellungen sind in Fig. 1 angedeutet und ihr Abstand ist mit (C) bezeichnet.

Die Kamera (9) besitzt ein sogenanntes flächenhaftes CCD-Array als lichtempfindlichen Flächensensor. Solche Sensoren besitzen typischerweise ca. 500 x 500 Bildelemente. Die durch die Bildelemente vorgegebene Auflösung kann durch Subpixel-Algorithmen weiter bis auf den Bruchteil eines Pixel-Abstandes gesteigert werden. Die Bildfläche eines Sensors ist in der Regel kleiner als 60 mm². Diese von der Anzahl der Bildelemente her begrenzte Auflösung ist für hochgenaue Vermessung von Industrieobjekten nicht ausreichend. Es ist deshalb erforderlich, das Objekt in mehreren Teilbildern zu erfassen und die räumliche Lage der Teilbilder in einem gemeinsamen Koordinatensystem zu bestimmen, in welchem die von dem Dreh/Schwenkgelenk (8) gelieferten Winkelpositionswerte zusammen mit den von der Kamera gelieferten Informationen über die Bildlage des interessierenden Meßpunktes miteinander verrechnet werden. Wenn die Videokamera (9) z.B. ein Bildfeld von 2° x 2° besitzt, ist es lediglich erforderlich, daß das Dreh/Schwenkgelenk (8) die daran angebaute Kamera grob auf ca. 1° positioniert und damit den interessierenden Objektbereich anzielt und dann bei Stillstand den exakten Winkelwert dem Rechner des Koordinatenmeßgerätes meldet. Eine exakte Nachregelung der Istrichtung auf die Sollrichtung ist nicht erforderlich.

Bei der Messung jeden Bildpunktes wird ein räumlicher Strahl definiert. Der Strahl ist durch das Projektionszentrum des Objektivs der Kamera (9) und die Bildkoordinaten xm, ym, zm festgelegt. zm ist hierbei der Abstand des Lotes vom Projektionszentrum des Objektivs auf die Ebene, in der der Bildsensor in der Kamera (9) angeordnet ist.

Für jede Messung muß die Lage des Sensors im Bildraum und die Orientierung des Bildraums im Koordinatensystem des Koordinatenmeßgerätes bekannt sein. Die Orientierung wird über die Winkelencoder im Dreh/Schwenkgelenk gemessen. Die Informationen über die Lage des Sensors im Abbildungsraum können durch Kalibrierung ermittelt werden oder kommen von der Videokamera selbst, indem dort wie an sich bekannt beispielsweise vor der Sensorebene ein Reseau, d.h. ein Meßgitter angeordnet ist.

Die Abbildungsverhältnisse und das vom Sensor in der Kamera (9) gelieferte Bild müssen außerdem während einer Messung stabil und reproduzierbar sein. Es ist deshalb zweckmäßig, mit Fixfokuskameras zu arbeiten, wobei mehrere Kameras mit unterschiedlichen Foki oder Optiken mit fester Brennweite über reprodzierbare Rasten gewechselt werden.

Der mit dem Koordinatenmeßgerät nach Fig. 1 durchgeführte Meßablauf läßt sich am besten anhand des Blockschaltbilds nach Fig. 2 beschreiben. Dort ist mit (22) die Steuerung bezeichnet, von der die Kamera auf Kommandobefehle des Rechners hin die Kamera in den drei verfahrbaren Meßachsen (x, y und z) positioniert wird und bezüglich ihrer Winkellage (a, b) mit Hilfe der Dreh/Schwenkeinrichtung so ausgerichtet wird, daß das gleiche Objektfeld aus zwei unterschiedlichen Positionen der Kamera (9) heraus aufgenommen werden kann.

Wie aus Fig. 2 hervorgeht ist in die Kamera (9) ein Projektor (39) integriert, mit dem ein Zielstrahl zur Markierung von Objektpunkten durch das Objektiv der Kamera hindurchprojiziert werden kann.

Die Videosignale der an dem Dreh/Schwenkgelenk (8) befestigten Kamera (9) sind einer Bildverarbeitungselektronik (19) zugeführt, die einen Bildspeicher (31) besitzt. In diesem Bildspeicher (31) können mehrere Bilder der Videokamera (9) abgespeichert werden, die den verschiedenen Winkelstellungen der Kamera und den beiden durch den Abstand (C) getrennten Positionen der Kamera entsprechen.

Damit das vom Sensor gelieferte Bild während der Messung geometrisch stabil bleibt, ist die Kamera (9) extern über die Steuerung (22) des Koordinatenmeßgerätes synchronisiert. Im Bildspeicher ist Speicherplatz für alle Bilder, die für eine Auswertung benutzt werden sollen, mindestens aber für zwei Bilder, die Aufnahmen aus den beiden verschiedenen Positionen des Meßarms heraus darstellen.

Während eines Meßzyklus wird also die Objektoberfläche aus den beiden Positionen der Kamera heraus in verschiedenen Winkelstellungen der Kamera vollständig aufgenommen, die aufgenommenen Bilder werden im Bildspeicher (31) abgespeichert und anschließend werden die interessierenden Objektdetails, die in den zu den beiden Positionen der Kamera gehörenden Bildern gleichzeitig auftreten wie z.B. Kanten, Marken etc., im Bildkoordinatensystem des Sensors der Kamera herausgearbeitet. Hierbei können bekannte Auswerteverfahren der digitalen Bildauswertung zum Einsatz kommen wie z.B. Schwellwert-, Gradienten- oder Korrelationsverfahren. Die von der Bildverarbeitungseinrichtung (19) gelieferten Bilddaten werden an den Rechner (20) des Koordinatenmeßgerätes übergeben. Diese Bilddaten sind Bildkoordinaten U(ij), V(ij), wobei der Index i die verschiedenen Objektpunkte und der Index j die den verschiedenen Aufnahmepositionen zugehörenden Bilder kennzeichnet.

Gleichzeitig erhält der Rechner (20) von der Steuerung (22) die Winkelmeßwerte (a, b), die den Orientierungen der Kamera zum Zeitpunkt der Bildaufnahme entsprechen. Diese Winkelmeßwerte (a, b) geben in Verbindung mit der Lage des Projektionszentrums des Objektivs der Kamera, die im wesentlichen durch die Meßwerte (xo, yo, zo) der Linearmaßstäbe (4, 5 und 6) des Gerätes bestimmt ist, die Orientierung des Bildkoordinatensystems im gemeinsamen Koordinatensystems des Gesamtgerätes wieder. Der Rechner ist daher in der Lage, mit den aus der Photogrammetrie bekannten Algorithmen des räumlichen Vorwärtseinschnitts die Objektkoordinaten (xi, yi, zi) eindeutig aus den gelieferten Positionsmeßwerten (xoj, yoj, zoj), den Winkelmeßwerten (aj, bj) und den von der Bildverarbeitungseinrichtung selbst gelieferten Bilddaten (Uij, Vij) zu berechnen.

Entsprechende Auswertealgorithmen sind beispielsweise in dem Buch "Photogrammetrie" von Konecny und Lehmann, Berlin; New York 1984 in Kapitel 4: "Punktweise Verarbeitung von Bilddaten" beschrieben.

Für eine eindeutige Auswertung sind pro Meßpunkt drei Meßwerte erforderlich. Die aus zwei Positionen des Meßarms erhaltenen zwei Bilder liefern aber bereits vier Meßwerte (jeweils zwei Bildkoordinaten Uij, Vij). Durch diese Überbestimmung kann das Berechnungsergebnis überprüft werden.

In die Berechnung geht die exakte Einbaulage des Dreh/Schwenkgelenks (8) an den Meßarm des Koordinatenmeßgerätes sowie die Anbaulage der Kamera am Dreh/Schwenkgelenk (8) ein. Diese Kalibrierdaten sind einmal bestimmt und in dem Speicher (24) des Rechners (20) des Koordinatenmeßgerätes abgelegt. Dieser Speicher (24) enthält außerdem Kalibrierdaten der Videokamera (9). Das sind Daten, die Geometrieabweichungen des Sensors selbst sowie die Verzeichnung des Objektivs der Videokamera (9) beschreiben.

In einem weiteren Speicher (25) des Rechners (20) sind die Steuerdaten abgelegt, anhand derer der CNC-Meßablauf für das betreffende Objekt (13) erfolgt. Hierbei übernimmt der Rechner (20) auch die Positionen und die Ausrichtung der Kamera (9) mit Hilfe der gespeicherten Steuerdaten. Aus den Steuerdaten für die Kameraorientierung und zusätzlich angegebenen Sollkoordinaten für die zu vermessenden Objektpunkte können Sollkoordinaten für die Bildpunkte berechnet werden. Mit diesen Sollkoordinaten für die Bildpunkte kann die digitale Bildauswertung effektiv gesteuert werden.

Zur Ausgabe der unter Berücksichtigung der Kalibrierdaten aus dem Speicher (24) berechneten Objektkoordinaten ist eine Ausgabeeinheit (23) vorgesehen. Das kann ein Bildschirm bzw. ein Drucker oder beides sein.

Die Vermessung des kompletten Werkstücks (13) kann bei entsprechend groß dimensionierten Bildspeichern "in einem Zuge" durchgeführt werden, indem alle interessierenden Meßpunkte zunächst aufgenommen und die entsprechenden Teilbilder 1 bis n abgespeichert werden. Als Speicher kann auch anstelle eines großen Halbleiter-Bildspeichers ein Echtzeit-Massenspeicher wie z.B. ein löschbarer optischer Plattenspeicher eingesetzt werden. Der für die Auswertung der Bilder erforderliche Rechenprozeß erfolgt dann anschließend, während bereits das nächste zu vermessende Werkstück auf dem Tisch (1) des Koordinatenmeßgerätes aufgelegt wird. Bei begrenztem Bildspeicherplatz bzw. ausgedehnten Objekten, die in eine Vielzahl von Teilbildern zerlegt werden müssen, wird der Rechenprozeß für die Auswertung parallel oder intermittierend zur eigentlichen Objektvermessung ablaufen.

Zur allseitigen Vermessung des Objekts muß die Videokamera (9) mit Hilfe des Meßarms (3) in mehrere Positionen um das Objekt herum verfahren werden. Bei ausgedehnten Werkstücken ist es jedoch mitunter schwierig, den für eine ausreichende Bildschärfe erforderlichen Mindestabstand zum Objekt einzuhalten. Für diesen Zweck empfiehlt es sich, das Werkstück bzw. Objekt (13) auf einem Drehtisch aufzuspannen und so mit Hilfe des Drehtisches zu positionieren, daß es über seinen gesamten Umfang von nur zwei Positionen der Kamera (9) aus vollumfänglich vermessen werden kann. In einem derartig modifizierten Ausführungsbeispiel sind der Antrieb des Drehtisches und dessen Winkelgeber zusätzlich an die Steuerung (22) im Blockschaltbild nach Fig. 2 anzuschließen.

Während des gesamten Meßvorganges sind die Lagebeziehungen zwischen dem zu vermessenden Objekt (13) und der Aufnahmekamera (9) mit der für das Koordinatenmeßgerät spezifizierten Genauigkeit und Stabilität bekannt und konstant. Es ist deshalb möglich, komplette Objekte in einem Meßablauf ohne zeitraubende, zwischengeschaltete Kalibriervorgänge zu vermessen. Vielmehr ist es ausreichend, das Gerät nach dem Ansetzen der Kamera einmal gegen Objekte mit bekannter Geometrie zu kalibrieren.

## Patentansprüche

1. Verfahren zur berührungslosen Koordinatenmessung an Objektoberflächen, bei dem mit einer Kamera Bilder des Objekts von mehreren unterschiedlichen Positionen aus aufgenommen werden, wobei
- die Kamera an einen mit einer Dreh-Schwenk-Einrichtung (8) versehen, in drei Raumrichtungen verfahrbaren Meßarm (3) eines Koordinatenmeßgerätes angesetzt wird,
- der Meßarm (3) in mindestens zwei verschiedene Stellungen verfahren wird und das zu vermessende Objekt (13) durch Verdrehen bzw. Verschwenken der Kamera mit Hilfe der Dreh-Schwenk-Einrichtung (8) angezielt wird,
- die in den beiden Stellungen aufgenommenen Bilder abgespeichert und in Bezug auf die Koordinaten charakteristischer Punkte auf der Objektoberfläche nach an sich bekannten photogrammetrischen Auswerteverfahren ausgewertet werden,
- wobei die von den Maßstäben (4 - 6) des Koordinatenmeßgerätes und den Winkelgebern (18a,b) der Dreh-Schwenk-Einrichtung erhaltenen Positions- und Winkelmeßwerte (xoj, yoj, zoj, aoj, boj) für die Berechnung der Objektkoordinaten (xi, yi, zi) aus den Bildkoordinaten (Uij, Vij) der Kamera mit herangezogen werden.

2. Verfahren nach Anspruch 1, wobei in den beiden Stellungen des Meßarms (3) jeweils mehrere Bilder bei unterschiedlicher Dreh- bzw. Schwenkwinkeln (a, b) der Dreh-Schwenk-Einrichtung (8) aufgenommen und abgespeichert werden.

3. Verfahren nach Anspruch 1, wobei die berechneten Objektkoordinaten mit Kalibrierdaten korrigiert werden, die die Anbaulage der Dreh-Schwenk-Einrichtung (8) an den Meßarm (3) des Koordinatenmeßgerätes, die Anbaulage der Videokamera gegenüber der Dreh-Schwenk-Einrichtung und gegebenenfalls die Geometrieabweichungen (Verzeichnung) der Videokamera (9) beschreiben.

4. Verfahren nach Anspruch 1, wobei das Objekt durch Verfahren des Meßarms (3) in unterschiedliche Positionen von allen Seiten angezielt und vermessen wird.

5. Verfahren nach Anspruch 1, wobei das Objekt selbst während der Vermessung in verschiedene Stellungen gedreht und seine Drehlage ebenfalls gemessen wird.

6. Koordinatenmeßgerät zur berührungslosen Vermessung von Objektoberflächen mit
- einer Kamera (9), die über ein motorisch dreh- und schwenkbares Gelenk (8) mit eingebauten Winkelgebern (18a, b) für die Dreh- und Schwenkbewegung an einem in drei Raumrichtungen verfahrbaren Meßarm (3) des Koordinatenmeßgerätes befestigt ist,
- einer Einrichtung (19, 20) zur Berechnung der Objektkoordinaten aus den Positionskoordinaten (xoj, yoj, zoj) des Meßarms und der Winkelstellung (aoj, boj) der Kamera sowie dem Videosignal der Kamera (9), welche Einrichtung
- einen Bildspeicher (31) umfaßt, in den mehrere Bilder des gleichen Objektbereichs einlesbar sind,
- eine Bildverarbeitungseinrichtung (19) besitzt, die im Verwendungsfall aus den gespeicherten Bilddaten übereinstimmender Objektpunkte deren Bildkoordinaten (Uij, Vij) berechnet,
- einen Auswerterechner (20) enthält, der im Verwendungsfall aus den Bildkoordinaten (Uij, Vij) der Punkte und aus den Positionsmeßwerten (xoj, yoj, zoj) der Maßstäbe (6) des Koordinatenmeßgerätes sowie aus den Winkelmeßwerten (aoj, boj) des Dreh-Schwenk-Gelenks die Objektkoordinaten (xi, yi, zi) der Bildpunkte nach dem Verfahren des räumlichen Vorwärtseinschnitts berechnet, und
- einen Speicher besitzt, in dem Kalibrierdaten des Dreh-Schwenk-Gelenks (8) bzw. der Kamera (9) abgelegt sind.

7. Koordinatenmeßgerät nach Anspruch 6, wobei die Kamera (9) zusammen mit einer optischen Projektionseinheit (39) am Meßarm (3) des Koordinatenmeßgerätes befestigt ist.

8. Koordinatenmeßgerät nach Anspruch 7, wobei die Kamera (9) und die Projektionseinheit (39) eine gemeinsame Baueinheit bilden, die an eine reproduzierbare Halterung am Dreh-Schwenk-Gelenk (8) automatisch einwechselbar ist.

9. Koordinatenmeßgerät nach Anspruch 8, wobei die Baueinheit (8, 9) zusammen mit taktilen Tastsensoren (40) in einem Magazin (10) des Koordinatenmeßgerätes ablegbar ist.

10. Koordinatenmeßgerät nach Anspruch 6, wobei die Kamera (9) mit der Steuerung (22) des Koordinatenmeßgerätes extern synchronisiert ist.

## Claims

1. A method for the contact-less measurement of coordinates on object surfaces in which pictures of the object are taken by a camera from several different positions, characterized by the fact that:
- the camera is placed on the measurement arm (3) of a coordinate measuring instrument, which arm is provided with a rotary/pivot means (8) and is moveable in three directions in space;
- the measurement arm (3) is moved into at least two different positions and the object (13) to be measured is targeted by turning or pivoting the camera by means of the rotary/pivot means (8);
- the pictures taken in the two positions are stored and evaluated with respect to the coordinates of characteristic points on the surface of the object by known photogrammetric methods of evaluation;
- the position and angle measurement values (xoj, yoj, zoj; aoj, boj) obtained from the scales (4 - 6) of the coordinate measuring instrument and from the angle transmitters (18a, b) of the rotary/pivot means being used for the calculating of the object coordinates (xi, yi, zi) from the picture coordinates (Uij, Vij) of the camera.

2. A method according to Claim 1, characterized by the fact that in both positions of the measurement arm (3) several pictures are taken with different angles of rotation or pivoting (a, b) of the rotary/pivot means (8) and stored.

3. A method according to Claim 1, characterized by the fact that the calculated object coordinates are corrected with calibration data which describe the position of attachment of the rotary/pivot means (8) on the measurement arm (3) of the coordinate measuring instrument, the position of attachment of the video camera with respect to the rotary/pivot means, and possibly the deviations in geometry (distortion) of the video camera (9).

4. A method according to Claim 1, characterized by the fact that the object is targeted and measured from all sides by moving the measurement arm (3) into different positions.

5. A method according to Claim 1, characterized by the fact that the object itself is turned into different positions during the measuring and its position of rotation is also measured.

6. A coordinate measuring instrument for the contactless measuring of surfaces of objects, having
- a camera (9) which is fastened via a motor-driven rotary and pivot joint (8) with built-in angle transmitters (18a, b) for the rotary and pivoting movement on a measurement arm (3) of the coordinate measuring instrument, which arm is moveable in three directions in space;
- means (19, 20) for calculating the object coordinates from the position coordinates (xoj, yoj, zoj) of the measurement arm and of the angular position (aoj, boj) of the camera, as well as from the video signal of the camera (9), which means
- comprise a picture storage (31) into which several pictures of the same region of the object can be read;
- has a picture-processing means (19) which, from the stored picture data of concordant object points, calculates their picture coordinates (Uij, Vij) if necessary,
- contains an evaluation computer (20) which, from the picture coordinates (Uij, Vij) of the points and from the position measurement values (xoj, yoj, zoj) of the scales (6) of the coordinate measuring instrument, as well as from the angle measurement values (aoj, boj) of the rotary/pivot joint calculates the object coordinates (xi, yi, zi) of the picture points, if necessary, by the method of space intersection, and
- has a storage in which calibration data of the rotary/pivot joint (8) and of the camera (9) are stored.

7. A coordinate measuring instrument according to Claim 5, characterized by the fact that the camera (9) is fastened, together with an optical projection unit (39), on the measurement arm (3) of the coordinate measuring instrument.

8. A coordinate measuring instrument according to Claim 7, characterized by the fact that the camera (9) and the projection unit (39) form a common structural unit which can be automatically placed on a reproducible mounting on the rotary/pivot joint (8).

9. A coordinate measuring instrument according to Claim 8, characterized by the fact that the structural unit (8, 9) together with tactile probe sensors (40) can be placed in a magazine (10) of the coordinate measuring instrument.

10. A coordinate measuring instrument according to Claim 6, characterized by the fact that the camera (9) is externally synchronized with the control (22) of the coordinate measuring instrument.

## Revendications

1. Procédé pour la mesure de coordonnées, sans contact, sur les surfaces d'un objet, utilisant une caméra pour capter les images de l'objet à partir de points d'observation différentes, sachant que
- la caméra est fixée sur un bras de mesure (3) qui est mobile dans trois axes, équipé d'un support orientable multidirectionnel (8) et monté lui-même sur une machine à mesurer tridimensionnelle;
- le bras de mesure (3) est amené dans au moins deux positions différentes et la caméra est pointée sur l'objet à mesurer (13) par rotation ou basculement à l'aide du support orientable multidirectionnel (8);
- les images saisies dans les deux positions différentes sont mises en mémoire, puis exploitées en liaison avec les coordonnées de points caractéristiques définis à la surface de l'objet, conformément à un procédé d'exploitation photogrammétrique connu en soi;
- le calcul des coordonnées-objet (xi, yi, zi) à partir des coordonnées-image (Uij, Vij) saisies par la caméra tient compte des positions et des valeurs angulaires (xoj; yoj, zoj, aoj, boj) fournies respectivement par les règles de mesure (4 - 6) de la machine à mesurer tridimensionnelle et par les capteurs angulaires (18a,b) du support orientable multidirectionnel (8).

2. Procédé conforme à la revendication 1 permettant, dans les deux positions du bras de mesure (3), de saisir et de mémoriser respectivement plusieurs images en réglant différents angles de rotation et de basculement (a, b) sur le support orientable multidirectionnel (8).

3. Procédé conforme à la revendication 1 autorisant la correction des coordonnées-objet sur la base de valeurs de calibrage représentant la position de montage du support orientable multidirectionnel (8) sur le bras de mesure (3) de la machine à mesurer, la position de montage de la caméra vidéo par rapport au support orientable multidirectionnel et le cas échéant, les erreurs géométriques (distorsion) de la caméra vidéo (9).

4. Procédé conforme à la revendication 1 permettant de viser et de mesurer l'objet sous tous les angles, en déplaçant le bras de mesure (3) pour l'amener dans différentes positions.

5. Procédé conforme à la revendication 1 permettant de faire tourner l'objet lui-même pour le mesurer dans différentes positions, en déterminant également les valeurs respectives de la rotation.

6. Machine à mesurer tridimensionnelle pour la mesure sans contact des surfaces délimitant un objet avec
- une caméra (9) fixée à un bras de mesure (3), qui est mobile dans trois axes et monté lui-même sur une machine à mesurer tridimensionnelle par l'intermédiaire d'un support orientable multidirectionnel (8) à moteur intégrant des capteurs angulaires (18a, b) pour les mouvements de rotation et de basculement;
- un dispositif (19, 20) pour le calcul des coordonnées-objet à partir des coordonnées de la position du bras de mesure (xoj, yoj, zoj), de la position angulaire (aoj, boj) de la caméra et du signal vidéo de la caméra (9), sachant que ce dispositif comprend
- une mémoire d'images (31) dans laquelle sont enregistrées plusieurs images du même champ d'objet,
- un système de traitement d'images (19) qui, en cas d'utilisation, calcule les coordonnées-image (Uij, Vij) des points correspondants de l'objet, à partir des données en mémoire,
- un système de traitement des données (20) qui, en cas d'utilisation, calcule les coordonnées-objet (xi, yi, zi) des points-image suivant le procédé d'intersection spatial, à partir des coordonnées-image (Uij, Vij) des points considérés, des valeurs (xoj, yoj, zoj) relevées sur les échelles (6) de la machine à mesurer tridimensionnelle et des valeurs angulaires (aoj, boj) du support orientable multidirectionnel.
- et une mémoire dans laquelle sont sauvegardées les valeurs de calibrage du support orientable multidirectionnel (8) et de la caméra (9).

7. Machine à mesurer tridimensionnelle conforme à la revendication 6 avec la caméra (9) fixée au bras de mesure (3) de la machine à mesurer, conjointement avec une unité de projection optique (39).

8. Machine à mesurer tridimensionnelle conforme à la revendication 7 sur laquelle la caméra (9) et l'unité de projection (39) forment un ensemble qui peut faire l'objet d'un échange automatique au niveau d'une fixation reproductible sur le support orientable multidirectionnel (8).

9. Machine à mesurer tridimensionnelle conforme à la revendication 8 sur laquelle le groupe modulaire (8, 9) est rangé dans un magasin (10) de la machine à mesurer tridimensionnelle, avec des palpeurs tactiles (40).

10. Machine à mesurer tridimensionnelle conforme à la revendication 6 sur laquelle la caméra (9) est synchronisée de façon externe avec la commande (22) de la machine à mesurer tridimensionnelle.
